# EUROPEAN PATENT SPECIFICATION

(11) **EP 1 140 567 B1**
(45) Date of publication and mention of the grant of the patent: **10.03.2004**
(21) Application number: 99962564.3
(22) Date of filing: 14.12.1999
(51) Int. Cl.: B60R 21/13, B60R 19/20

(54) **ARRANGEMENT FOR A VEHICLE OR PART OF A VEHICLE**
EINRICHTUNG FÜR EIN FAHRZEUG ODER EIN FAHRZEUGTEIL
DISPOSITIF DESTINE A UN VEHICULE OU A UNE PARTIE D'UN VEHICULE

(30) Priority: 16.12.1998 NL 1010821
(43) Date of publication of application: 10.10.2001
(73) Proprietor: Eenkhoorn, Erik Jeroen, 7558 HG Hengelo (NL)
(72) Inventor: Eenkhoorn, Erik Jeroen, 7558 HG Hengelo (NL)
(74) Representative: Merkelbach, B.
(86) International application number: PCT/NL1999/000772
(87) International publication number: WO 2000/035718

(56) References cited:
- WO-A-98/13231
- DE-A- 2 020 360
- DE-A- 4 009 244
- DE-A- 19 611 539
- DE-A- 19 650 629
- DE-A- 19 744 817
- DE-U- 8 710 043
- US-A- 5 658 011

## Description

The invention relates to an arrangement for a vehicle or part of a vehicle particularly for a truck, tanker, trailer or bus which is either or not moving on a road and to the outside of said vehicles means are applied which will expand or enlarge in volume due to circumstances which will result into initial overturning of said vehicle whereby said expanding means create shock-absorbing elements between the road and the overturning vehicle which means mainly consist of inflatable, flexible containers which are applied to the relevant sides of the vehicle and being part of a controlling system which will measure and react to an overturning of said vehicle as well as being connected to a system for inflating said containers.
Such an arrangement is described by the German disclosures DE 8710043 (that forms the closest prior art according to the preamble of claim 1) and DE 4009244. These disclosures, however, mainly refer to the result of the shock-absorbing elements during or after the overturning of an vehicle and not disclose for example measures that could prevent such overturning.

It is known that vehicles for various reasons e.g. a high speed in bends or an almost collision or a side-slip could overturn. Yet for a good understanding it is elucidated herewith that the cargo or content of trucks and especially tankers has a significant influence on the overturning of such a vehicle. This influence is critically depending on what kind of cargo is stored in the truck or tanker, especially stored liquid can cause and shift freely with sudden manoeuvres of the tanker. The liquid can cause an impelling force or motion which will expedite the overturning of the vehicle. This so-called bulky-tankers have, in practice, a relatively higher chance of overturning. Often bulky-tankers are filled with chemical or petro-chemical products.

However, fact is that the above mentioned disclosures lack the vital information of e.g. the beginning of an overturning or another critical situation. In order to overcome this drawback the invention introduces the measure which is characterised in that the controlling system comprises sensors which continuously indicate the wheel pressure and position of the wheel-shafts of the vehicle with regard to the road. Due to this measure the driver will always be informed whether an overturning would take place or not and therefore could properly react. In the event of lacking certain wheel pressure on the road caused by loss of contact by one or a group of wheels the (possible) start of an overturn is registered by the system due to which the inflation of the relevant containers is initiated on the overturning side of the vehicle.

An other preferable embodiment of the arrangement according to the invention is characterised in that the amount of wheel pressure and/or the position of the wheel-shafts of the vehicle with regard to the road will determine the activity of the inflating system of the relevant containers. Due to this measure unnecessary inflating of the relevant container(s) will be prevented in the event of a short interruption of contact between wheel and road whilst there would be not an overturning of the vehicle. In this respect the arrangement offers the advantage which is characterised in that the inflating system for the containers is connected to a controlling system monitoring different wheel-groups of the vehicle separately.

Preferably the inflating system of the containers comprises cylinders which are filled with gas under high pressure or a foam forming means, which signifies that the content of a volume enlarging container in a gas forming state under normal conditions remains as a fast liquid or as a high-pressured gas transported in a so-called non-activated container system. This content may have an additional positive contribution during or directly after overturning of the vehicle as it can reduce the risk and possibilities of a fire or an explosion or reduces the chemical effects of a transported product which leaks out of the vehicle.

Another effective embodiment of the arrangement according to the invention is that a container is made of a very durable material which is provided with highly resistant parts e.g. ridgy protrusions which by overturning of the vehicle will enlarge the friction between the inflated container(s) and the road most likely preventing a possible collision with another transportation.

The invention will hereafter be described as shown by the figures due to which other features and advantages will be illucidated.
Fig. 1 shows the back of a tanker on the road;
Fig. 2 shows the tanker according to Fig. 1 overturning on the left;
Fig. 3 shows the overturned tanker of Fig.1.

Fig. shows schematically a tanker 1 which as such is a known vehicle, mainly comprising of a chassis 2 with a loading platform 3 which usually include wheel suspensions 4 with back-wheels 5,6 and a reserve wheel 7. On platform 3 a cylindrical tank 8 is mounted having an opening 9 which can be reached via a ladder 10. According to the invention on the sides 11 and 12 of tank 8 flat non-inflated containers 13,14 resp. 15,16 are fitted which containers follow the outside shape of tank 8 such that the driving resistance of tanker 1 is as small as possible. Furthermore at appropriate places in the wheel suspension system 4 pressure measuring-elements e.g. Load cells 17,18 are applied which are connected to a measuring and control-system (further not shown) which specific data will be noticeable in the tanker's cabin. Five most important parts of the control system are: a pressure gauge e.g. Load cells, this gauge continously measures the actual pressure between wheel (5,6) and road 19; a pressure adjustment device which indicates the limit due to which the relevant container(s) must be activated; a pressure comparing device which compares the actual (measured) pressure with the set limit pressure; a so-called container-initiator which converts the result of comparison between the afore mentioned pressures in order to activate the inflateable system respectively gas-forming or gas-providing substance for a container. Furthermore a safety sensor is fitted to prevent unnecessary activation of the gas-cylinders for the containers in case of a collision (in stead of overturning of the vehicle). The system works continously. The measurements preferably are continously monitored whether the vehicle (tanker) is moving/driving or not. Particularly the data concern the pressure between the wheels 5,6 and the road 19, and when necessarily, also the angle of the wheel shaft 20 with respect to the road in which case the afore mentioned five devices relate to the measuring of the angle between the shafts and the road rather than the wheel pressures. Measuring of this angle can be of importance e.g. in case the tanker is driving across uneven grounds during which the wheel-pressure (shortly) can drop off whilst there is no question of an initial overturn since the wheel-shaft 20 did not meet a specific critical angle with respect to the road or grounds.

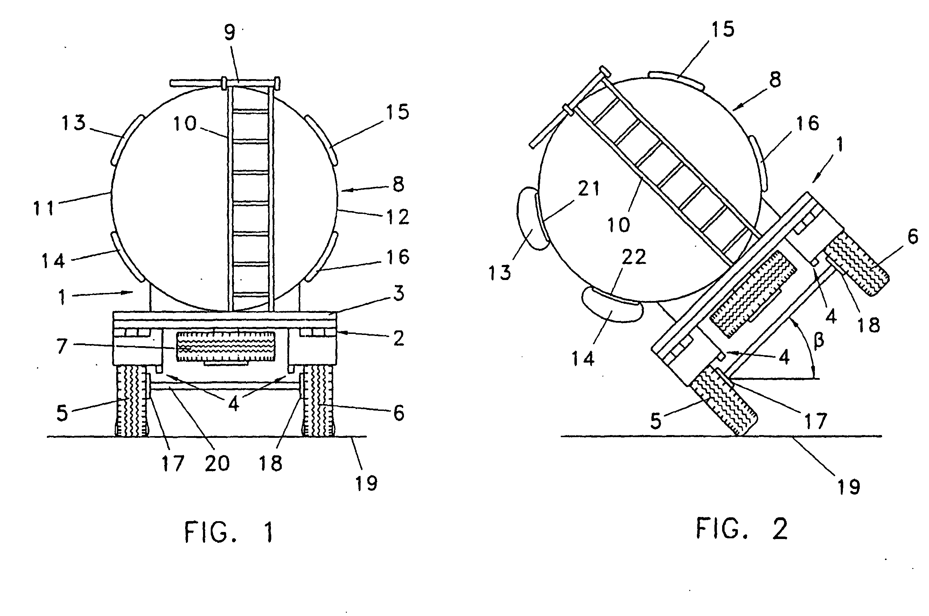

Fig. 2 shows the start of aan overturning of tanker 1 which overturn is observed due to drop of pressure between the wheel 6 and the road 19 as measured by the control system of this vehicle 1 as well as the development of the angle β of the wheel-shaft 20 which facts according to the invention result into inflating of the containers 13 and 14 to their shape as shown. It is noticed that according to a prefered embodiment the gas or foam cylinders 21,22 which will inflate the containers 13 resp. 14 are fitted on the inside of these containers. According to this measure the use of special tubes or hoses for the high-pressured gas or foam can be avoided.

As has been mentioned above the (inflated) containers (13 and 14) are mounted lengthwise or circumferential on the tank 8 and are mainly cylindrical in shape. However, containers may also according to their sectional view be oval. For a tanker with normal dimensions an inflated lengthwise container can have e.g. a diameter of minimal 30 cm and a length of minimal 2 m. This container will have a thickness in the inactive position of 5 - 15 cm. If necessary the (effective) length of a container may be same as the length of the tank.

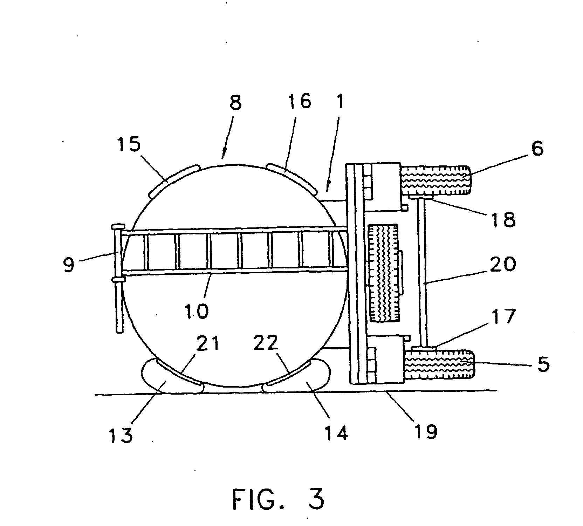

Fig. 3 shows the position after the overturn of tanker 1 whereby the two inflated containers 13,14 are thus situated between the road 19 and the tank 8 and have absorb the shock(s) resp. impact or impact-energy between tanker 1 and the road 19 such that damages of tank and road are prevented or at least limited. Another favourable effect is that there is less risk of tearing the tank-walls such that the whole content of tank 8 or part of it is prevented from causing harm to the environment.
It is noticed that manufacturing of a container from a durable synthetic material will have a chemical resistance and will meet the fire safity demands. Moreover, in case such a vehicle has to be driven through a water-rich area containers shall be fitted which will have such a dimension that when inflated the floating capacity of the vehicle that has e.g. run into water or mud, will be enlarge.
An arrangement according to the invention is obviously not restricted to the examples of the embodiments as described since other arrangements of flexible inflateable containers having suitable shapes which can be activated by a control system of the above described ability are also applicable for other types of a vehicle.

## Claims

1. Arrangement for a vehicle or part of a vehicle, particularly for a truck, tanker (1), trailer or bus, which is either or not moving on a road and to the outside of said vehicles means (13-16) are applied which will expand or enlarge in volume due to circumstances which will result into initial overturning of said vehicle whereby said expanding means create shock-absorbing elements (13,14) between the road and the overturning vehicle which means mainly consist of inflatable, flexible containers (13-16) which are applied to the relevant sides of the vehicle and being part of a controlling system which will measure and react to an overturning of said vehicle as well as being connected to a system (21,22) for inflating said containers, **characterised in that** the controlling system comprises sensors which continuously indicate the wheel pressure and position of the wheel-shafts (20) of said vehicle (1) with regard to the road (19).

2. Arrangement according to claim 1, **characterised in that** the amount of wheel pressure and/or the position of the wheel-shafts (20) of said vehicle (1) with regard to the road (19) will determine the activity of the inflating system of the relevant containers (13-16).

3. Arrangement according to claim 1 or 2, **characterised in that** the inflating system for said containers (13-16) being connected to a controlling system monitoring different wheel-groups of the vehicle (1) separately.

4. Arrangement according to claim 1 - 3, **characterised in that** the inflating system of said containers (13-16) comprises cylinders (21,22) which are filled with gas under high pressure or a foam forming means.

5. Arrangement according to one or more of the preceding claims and claim 4, **characterised in that** a high pressure gas-cylinder is arranged in the interior of each container (13-16).

6. Arrangement according to one or more of the preceding claims, **characterised in that** a container (13-16) is made of a very durable material which is provided with highly resistant parts e.g. ridgy protrusions which by overturning of the vehicle (1) will enlarge the friction between the inflated container(s) and the road (19).

## Patentansprüche

1. Ausstattung für ein Fahrzeug oder Teil eines Fahrzeuges, insbesondere für einen Lastwagen, Tankwagen (1), Anhänger oder Bus, ob es sich auf einer Strasse bewegt oder nicht, bestehend aus einer an der Außenseite des genannten Fahrzeuges angebrachten Vorrichtung (13-16), deren Volumen sich ausdehnt oder erweitert, infolge der Situationen die zum ursprünglichen Umkippen des genannten Fahrzeuges führten, wobei die genannten ausdehnbaren Vorrichtungen stossdämpfende Elemente (13-14) bilden zwischen der Strasse und dem umkippenden Fahrzeug und hauptsächlich aus aufblasbaren, flexiblen Behältern (13-16) bestehen, die auf die entsprechenden Seiten des Fahrzeuges angebracht werden und die, als Bestandteil eines Kontrollsystems, das ein Umkippen des genannten Fahrzeuges mist und darauf reagiert, und gleichzeitig verbunden ist mit einem System (21,22) zum aufblasen der genannten Behälter, **dadurch gekennzeichnet, daß** das Kontrollsystem über Sensoren verfügt, die durchgehend den Reifendruck und die Position der Radachse (20) des genannten Fahrzeuges (1) im Vergleich zur Straße (19) angeben.

2. Ausstattung nach Anspruch 1, **dadurch gekennzeichnet, daß** die Höhe des Druckes und/oder die Position der Radachse (20) des genannten Fahrzeuges (1) in Bezug auf die Straße (19), die Aktivation des Aufblassystems des entsprechenden Behälters (13-16) bestimmt.

3. Ausstattung nach Anspruch 1 oder 2, **dadurch gekennzeichnet, daß** das Aufblassystem für die genannten Behälter (13-16) mit dem Kontrollsystem verbunden ist, welches verschiedene Reifengruppen des Fahrzeuges (1) separat kontrolliert.

4. Ausstattung nach Anspruch 1 - 3, **dadurch gekennzeichnet, daß** das Aufblassystem der genannten Behälter (13-16) Zylinder (21,22) beinhaltet, die unter hohem Druck mit Gas eingefüllt werden oder mit einem schaumbildenden Mittel.

5. Ausstattung nach einem oder mehrerer der oben angeführten Ansprüche und nach Anspruch 4, **dadurch gekennzeichnet, daß** ein Hochdruckgaszylinder innerhalb jedes Behälters (13-16) eingebaut ist.

6. Ausstattung nach einem oder mehrerer der oben angeführten Ansprüche, **dadurch gekennzeichnet, daß** ein Behälter (13-16) aus sehr dauerhaftem Material besteht, das mit hochresistenten Teilen wie z.B. kantigen Protuberanzen versehen ist, die beim Umkippen des Fahrzeuges (1) die Reibungpunkte zwischen dem/den aufgeblähten Behälter(n) und der Strasse (19) erhöhen.

## Revendications

1. Dispositif pour véhicule ou partie de véhicule, en particulier pour un camion, un pétrolier, une remorque ou un bus, qui se meut ou non sur une route et à l'extérieur duquel ou de laquelle des moyens (13-16) sont appliqués qui s'étendront ou augmenteront de volume à cause de circonstances qui provoqueront le renversement initial dudit véhicule, lesdits moyens d'expansion créant des éléments (13, 14) amortissant les chocs entre la route et le véhicule qui se retourne, consistant principalement en des conteneurs flexibles et gonflables appliqués sur les côtés concernés du véhicule, faisant partie d'un système de contrôle qui mesure et réagit au retournement dudit véhicule et étant raccordé à un système (21, 22) de gonflage desdits conteneurs, **caractérisé en ce que** le système de contrôle comprend des capteurs indiquant en permanence la pression des pneus et la position des essieux (20) dudit véhicule (1) par rapport à la route (19).

2. Dispositif conforme à la revendication 1, **caractérisé en ce que** la pression des roues et / ou la position des essieux (20) dudit véhicule (1) par rapport à la route (19) détermine l'activité du système de gonflage des conteneurs concernés (13-16).

3. Dispositif selon la revendication 1 ou 2, **caractérisé en ce que** le système de gonflage desdits conteneurs (13-16) est raccordé à un système de contrôle supervisant séparément plusieurs groupes de roues du véhicule (1).

4. Dispositif selon les revendications 1 à 3, **caractérisé en ce que** le système de gonflage des dits conteneurs (13-16) comprend des cylindres (21, 22) remplis de gaz sous haute pression ou avec un moyen formateur de mousse.

5. Dispositif selon une ou plusieurs des revendications précédentes et selon la revendication 4, **caractérisé en ce qu'**un cylindre rempli de gaz sous haute pression a été disposé à l'intérieur de chaque conteneur (13-16).

6. Dispositif selon une ou plusieurs des revendications précédentes, **caractérisé en ce qu'**un conteneur (13-16) est constitué d'un matériau à grande longévité équipé de parties très résistantes, comme des proéminences en forme de crête, qui, lorsque le véhicule (1) se retourne, augmente la friction entre le(s) conteneur(s) gonflé(s) et la route (19).
